(19) Europäisches Patentamt
European Patent Office
Office européen des brevets

(11) EP 4 414 486 A1

(12) **EUROPEAN PATENT APPLICATION**
published in accordance with Art. 153(4) EPC

(43) Date of publication:
**14.08.2024 Bulletin 2024/33**

(21) Application number: **22878432.8**

(22) Date of filing: **29.09.2022**

(51) International Patent Classification (IPC):
***D01F 6/84*** *(2006.01)*

(52) Cooperative Patent Classification (CPC):
**D01F 6/84**

(86) International application number:
**PCT/JP2022/036593**

(87) International publication number:
**WO 2023/058563 (13.04.2023 Gazette 2023/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.10.2021 JP 2021166307**

(71) Applicant: **Kuraray Co., Ltd.**
**Kurashiki-shi, Okayama 710-0801 (JP)**

(72) Inventors:
- **TERAMOTO, Yukihiro**
  **Kurashiki-shi, Okayama 713-8550 (JP)**
- **TSUJIMOTO, Takuya**
  **Kurashiki-shi, Okayama 713-8550 (JP)**
- **KAMADA, Hideki**
  **Kurashiki-shi, Okayama 713-8550 (JP)**

(74) Representative: **Müller-Boré & Partner Patentanwälte PartG mbB**
**Friedenheimer Brücke 21**
**80639 München (DE)**

# (54) LIQUID CRYSTAL POLYESTER FIBERS AND METHOD FOR PRODUCING SAME

(57) Provided is a liquid crystal polyester fiber that suppresses gas generation during heating and has excellent hue. The liquid crystal polyester fiber has a total amount of carboxy end groups (total CEG amount) of 5.0 mEq/kg or less and a ketone bond amount of 0.05 mol% or less. For example, the liquid crystal polyester fiber may have a melting point of 380°C or lower. In addition, the liquid crystal polyester fiber may have a tenacity of lower than 18 cN/dtex. Moreover, the liquid crystal polyester fiber may contain a liquid crystal polyester having a structural unit derived from 4-hydroxybenzoic acid at a proportion of 50 mol% or more.

EP 4 414 486 A1

## Description

CROSS REFERENCE TO THE RELATED APPLICATION

This application is based on and claims Convention priority to Japanese patent application No. 2021-166307, filed October 8, 2021, the entire disclosure of which is herein incorporated by reference as a part of this application.

FIELD OF THE INVENTION

The present invention relates to a liquid crystal polyester fiber and a method for producing the same.

BACKGROUND OF THE INVENTION

There has been conventionally known, as an intermediate material used in production of a fiber-reinforced composite material, combined yarns containing reinforcing fibers and thermoplastic fibers (in the case of intermediate materials for fiber-reinforced composites, thermoplastic fibers are sometimes hereinafter referred to as heat-fusible fibers because they are melt-fused in a subsequent process). For example, Patent Document 1 (JP Laid-Open Patent Publication No. H01-280031) discloses a method for producing a flexible combined fiber useful for composite products, the method including combining and bundling reinforcing multifilaments and thermoplastic multifilaments into a layered form. Patent Document 2 (Japanese Laid-Open Patent Publication No. 2013-237945) discloses a combined yarn which is suitable for forming resin composite materials and in which continuous reinforcing fibers and continuous thermoplastic resin fibers are blended together. Patent Document 3 (JP Laid-Open Patent Publication No. H04-73227) discloses a method for producing a commingled yarn for thermoplastic composites, the commingled yarn containing continuous thermoplastic fibers and continuous reinforcing fibers.

Such combined yarns containing continuous reinforcing fibers and continuous thermoplastic fibers are more flexible than prepregs (e.g., tape-like or fabric-like materials comprising reinforcing fiber tows or fabric coated or covered with a thermosetting resin), which are generally used as precursors for fiber-reinforced composite materials, or than intermediate materials comprising reinforcing fiber tows or fabric melt-impregnated with a thermoplastic resin. Such combined yarns can be easily handled to form fabrics with various three-dimensional deformations, such as those having cylindrical or domed shapes, by a weaving process, a knitting process, or the like. Therefore, the combined yarns can be effectively used as a raw material for sheet-shaped fiber-reinforced molded bodies with three-dimensional features in shape, such as duct tubes and automobile bumpers.

RELATED ART DOCUMENT

PATENT DOCUMENT

[Patent Document 1] JP Laid-Open Patent Publication No. H01-280031
[Patent Document 2] JP Laid-Open Patent Publication No. 2013-237945
[Patent Document 3] JP Laid-Open Patent Publication No. H04-73227

SUMMARY OF THE INVENTION

Considering that such molded bodies are applicable to many applications which involve vibrations, such as duct tubes and automobile bumpers as mentioned above, there is an expectation that liquid crystal polyester fibers made of a liquid crystal polyester, which is a thermoplastic resin with excellent vibration damping properties, can be used as reinforcing fibers or heat-fusible fibers to produce molded bodies with excellent vibration damping properties.

However, where liquid crystal polyester fibers are used as heat-fusible fibers, thermal decomposition gas is generated from the liquid crystal polyester fibers when the liquid crystal polyester fibers are heated to a temperature at which fusion processing is enabled, so that there is a problem that many bubbles are generated inside and on the surface of the obtained fiber-reinforced molded body, leading to reduced strength and poor appearance.

In addition, there is also a problem that the hue (yellowish color) of the liquid crystal polyester fibers leads to poor appearance of the molded body.

An object of the present invention is to solve the above problems and to provide a liquid crystal polyester fiber that does not generate bubbles when used as a heat-fusible fiber and heated for melt-fusing and allows a molded body having excellent hue to be produced.

The inventors of the present invention have conducted extensive studies in order to achieve the aforementioned object, and found that thermal decomposition gas generated from a liquid crystal polyester fiber when heated to a predetermined temperature is triggered by decarboxylation reaction in a carboxy group where the carboxy group exists at an end of a liquid crystal polyester constituting the liquid crystal polyester fiber. Furthermore, the inventors have found that ketone bonds formed by side reactions exist in the liquid crystal polyester constituting the liquid crystal polyester fiber, and that these ketone bonds affect the hue of the liquid crystal polyester fiber, leading to the completion of the present invention.

That is, the present invention may include the following aspects.

Aspect 1

A liquid crystal polyester fiber having a total amount of carboxy end groups (total CEG amount) of 5.0 mEq/kg or less (preferably 4.0 mEq/kg or less, more preferably 3.0 mEq/kg or less, further preferably 2.5 mEq/kg or less, and still more preferably 2.0 mEq/kg or less) and a ketone bond amount of 0.05 mol% or less (preferably 0.04 mol% or less and more preferably 0.03 mol% or less).

Aspect 2

The liquid crystal polyester fiber according to aspect 1, having a melting point of 380°C or lower (preferably from 250 to 350°C and more preferably from 260 to 300°C).

Aspect 3

The liquid crystal polyester fiber according to aspect 1 or 2, having a tenacity of lower than 18 cN/dtex (preferably 2 to 16 cN/dtex and more preferably 6 to 12 cN/dtex).

Aspect 4

The liquid crystal polyester fiber according to any one of aspects 1 to 3, comprising a liquid crystal polyester comprising a structural unit derived from 4-hydroxybenzoic acid at a proportion of 50 mol% or more (preferably 53 mol% or more and more preferably 60 mol% or more).

Aspect 5

The liquid crystal polyester fiber according to any one of aspects 1 to 4, having a total amount of one-end groups of 50 mEq/kg or more (preferably 55 mEq/kg or more and more preferably 60 mEq/kg or more).

Aspect 6

A method for producing the liquid crystal polyester fiber as recited in any one of aspects 1 to 5, the method at least comprising: melt-kneading a liquid crystal polyester in an extruder to obtain a melt-kneaded material; and spinning by discharging the melt-kneaded material from a spinneret.

Aspect 7

The method according to aspect 6, wherein, in the melt-kneading, a thermal history TH represented by the following formula (1) is 250 to 1100 (preferably 300 to 1000, more preferably 350 to 950, and further preferably 400 to 900), Math. 1

$$TH = \sum_{x=y+1}^{M} \{T_x - (Mp_0 + 10)\} \qquad (1)$$

in the formula, $Mp_0$ denotes a melting point (°C) of the liquid crystal polyester; x denotes a time (minutes), where x = 0 is defined as a time when the liquid crystal polyester is fed into the extruder, x = 1, 2,... is defined as each time during residence, and x = M is defined as a time when the melt-kneaded material is discharged from the spinneret; $T_x$ ($T_1$,

$T_2$,..., $T_M$) denotes each heating temperature (°C) every minute in a residence time from feeding to discharging; y denotes a staying time (minutes) in a heating temperature region where $T_x \leq (Mp_0 + 10)$ after feeding; when M and y are not integers, M and y are rounded off and calculated as integers; and M is an integer satisfying $M \geq y + 1$.

Aspect 8

The method according to aspect 6 or 7, wherein the extruder is a twin-screw extruder.

Aspect 9

A fiber structure comprising, at least in part of the fiber structure, the liquid crystal polyester fiber as recited in any one of aspects 1 to 5.

Aspect 10

The fiber structure according to aspect 9, further comprising a reinforcing fiber.

Aspect 11

A method for producing a molded body, the method comprising heating the fiber structure as recited in aspect 9 or 10 at a temperature equal to or higher than a melting point of the liquid crystal polyester fiber to mold the molded body.

Any combination of at least two constructions, disclosed in the appended claims and/or the specification and/or the accompanying drawing should be construed as included within the scope of the present invention. In particular, any combination of two or more of the appended claims should be equally construed as included within the scope of the present invention.

The liquid crystal polyester fiber according to the present invention can suppress gas generation during melt-heating and allows a molded body having fewer bubbles and excellent hue to be produced.

BRIEF DESCRIPTION OF THE DRAWINGS

In any event, the present invention will become more clearly understood from the following description of preferred embodiments thereof, when taken in conjunction with the accompanying drawing. However, the embodiments and the drawing are given only for the purpose of illustration and explanation, and are not to be taken as limiting the scope of the present invention in any way whatsoever, which scope is to be determined by the appended claims. The drawings are not necessarily shown at a consistent scale and are exaggerated in order to illustrate the principle of the present invention. In the figures,

Fig. 1 is a schematic diagram for describing a method for producing a liquid crystal polyester fiber according to an embodiment of the present invention.

DESCRIPTION OF EMBODIMENTS

Liquid Crystal Polyester Fiber

The liquid crystal polyester fiber according to the present invention comprises a liquid crystal polyester. The liquid crystal polyester comprises structural units originating from, for example, aromatic diols, aromatic dicarboxylic acids, aromatic hydroxycarboxylic acids, etc. As long as the effect of the present invention is not impaired, the structural units originating from aromatic diols, aromatic dicarboxylic acids, and aromatic hydroxycarboxylic acids are not limited to a specific chemical composition. The liquid crystal polyester may include the structural units originating from aromatic diamines, aromatic hydroxy amines, or aromatic aminocarboxylic acids in the range which does not impair the effect of the present invention. For example, preferable structural units may include units shown in Table 1.

Table 1

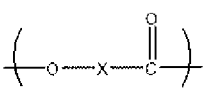
,
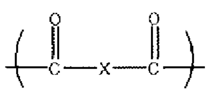
,
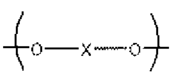
,
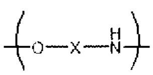

In the formula, X is selected from the following

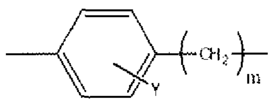 , 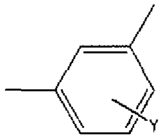 , 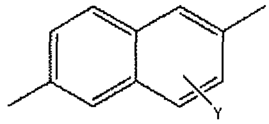 ,

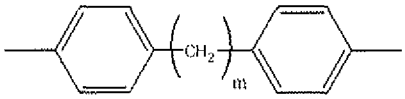 , 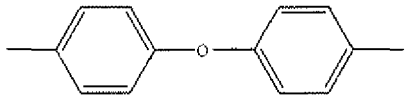 ,

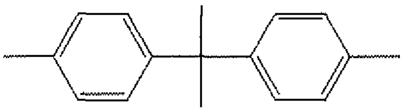 , 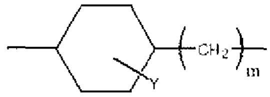 , 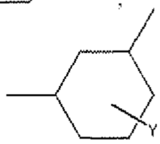

m is an integer from 0 to 2, Y is a substituent selected from hydrogen atom, halogen atoms, alkyl groups, aryl groups, aralkyl groups, alkoxy groups, aryloxy groups, aralkyloxy groups.

In the structural units in Table 1, m is an integer from 0 to 2, and Y in the formula independently represents, as from one substituent to the number of substituents in the range of the replaceable maximum number of aromatic ring, a hydrogen atom, a halogen atom (for example, fluorine atom, chlorine atom, bromine atom and iodine atom), an alkyl group (for example, an alkyl group having 1 to 4 carbon atoms such as methyl group, ethyl group, isopropyl group and t-butyl group), an alkoxy group (for example, methoxy group, ethoxy group, isopropoxy group, n-butoxy group, etc.), an aryl group (for example, phenyl group, naphthyl group, etc.), an aralkyl group [for example, benzyl group (phenylmethyl group), phenethyl group (phenylethyl group), etc.], an aryloxy group (for example, phenoxy group, etc.), an aralkyloxy group (for example, benzyloxy group, etc.), and others.

As more preferable structural units, there may be mentioned structural units as described in Examples (1) to (18) shown in the following Tables 2, 3, and 4. It should be noted that where the structural unit in the formula is a structural unit which can show a plurality of structures, combination of two or more units may be used as structural units for a polymer.

Table 2

| | |
|---|---|
| (1) | 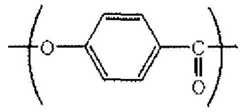, 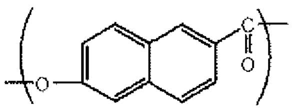 |
| (2) | 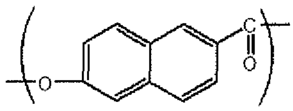, 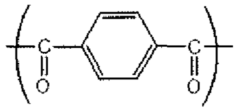, 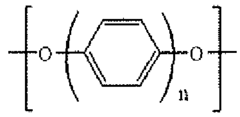 |
| (3) | 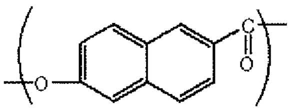, 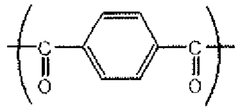, 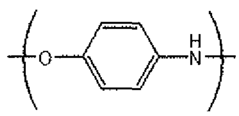 |
| (4) | 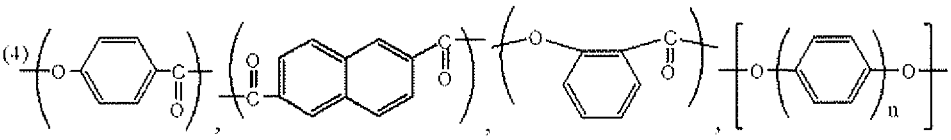 , , , |
| (5) | 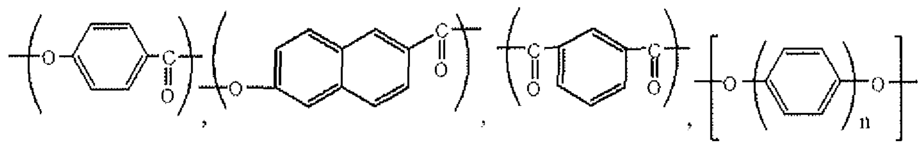 , , , |
| (6) | 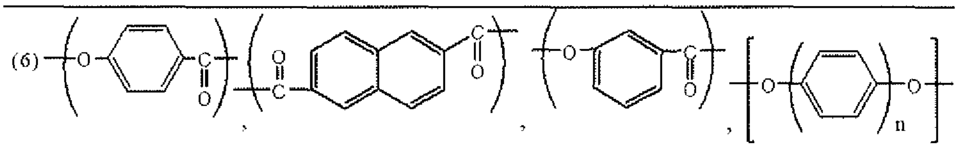 , , , |
| (7) | 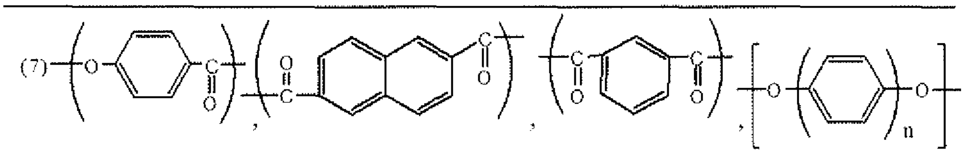 , , , |
| (8) | 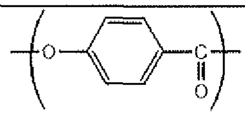, 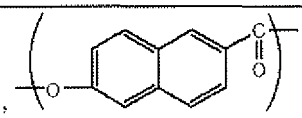, 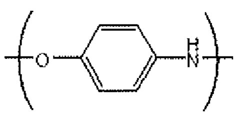, 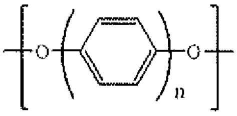, 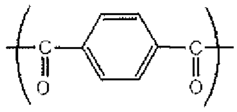 |

Table 3

| | |
|---|---|
| (9) | 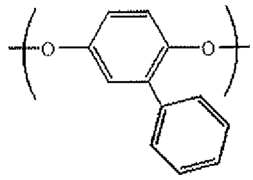 , 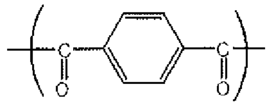 |
| (10) | 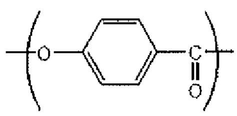 , 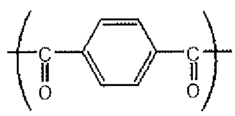 , 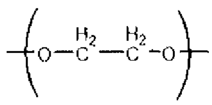 |
| (11) | 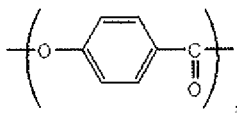 , 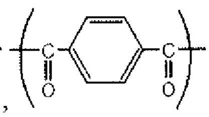 , 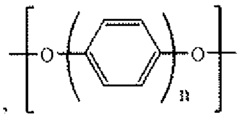 , 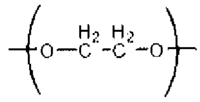 |
| (12) | 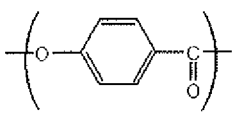 , 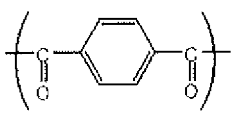 , 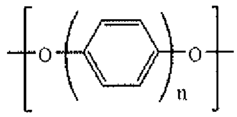 |
| (13) | 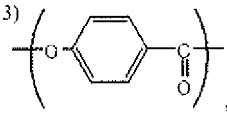 , 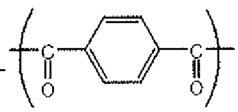 , 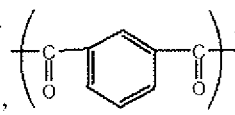 , 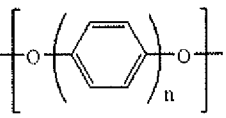 |
| (14) | 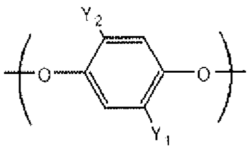 , 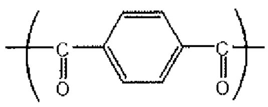 , 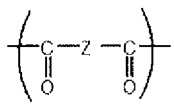 |
| (15) | 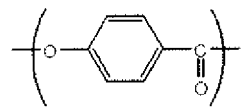 , 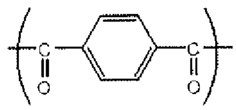 , 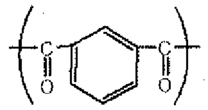 , 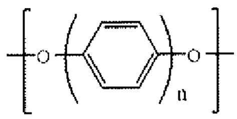 , 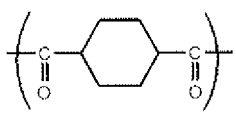 |

Table 4

| | |
|---|---|
| (16) | 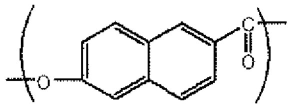 , 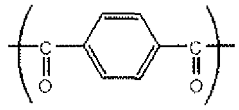 , 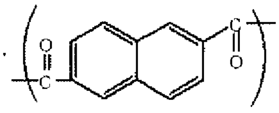 , 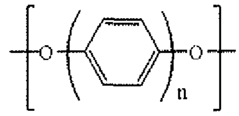 |
| (17) | 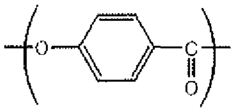 , 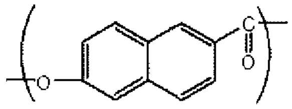 , 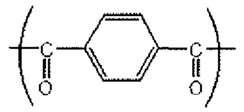 , 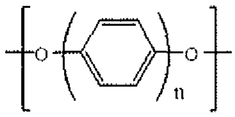 |
| (18) | 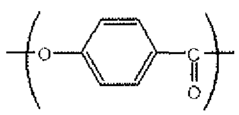 , 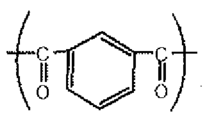 , 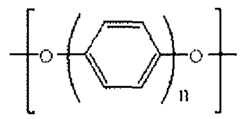 |

In the structural units shown in Tables 2, 3, and 4, n is an integer of 1 or 2, among each of the structural units, n = 1 and n = 2 may independently exist, or may exist in combination; each of the $Y_1$ and $Y_2$ independently represents, a hydrogen atom, a halogen atom (for example, fluorine atom, chlorine atom, bromine atom, iodine atom, etc.), an alkyl group (for example, an alkyl group having 1 to 4 carbon atoms such as methyl group, ethyl group, isopropyl group, and t-butyl group, etc.), an alkoxy group (for example, methoxy group, ethoxy group, and isopropoxy group, n-butoxy group, etc.), an aryl group (for example, phenyl group, naphthyl group, etc.), an aralkyl group [for example, benzyl group (phenylmethyl group), phenethyl group (phenylethyl group), etc.], an aryloxy group (for example, phenoxy group, etc.), an aralkyloxy group (for example, benzyloxy group, etc.), and others. Among these, the preferable one may include a hydrogen atom, a chlorine atom, a bromine atom, and a methyl group.

Z may include substitutional groups denoted by following formulae.

Chem. 1

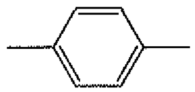 , 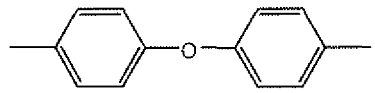 , 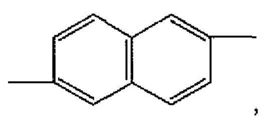 ,

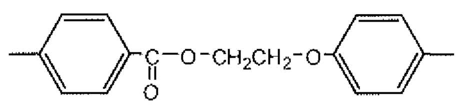 , 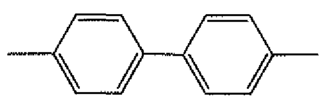

A preferable liquid crystal polyester may comprise a combination of a structural unit having a naphthalene skeleton. An especially preferable one may include both a structural unit (A) derived from 4-hydroxybenzoic acid and a structural unit (B) derived from hydroxy naphthoic acid. For example, the structural unit (A) may have the following formula (A), and the structural unit (B) may have the following formula (B). In order to improve melt-formability, the ratio of the structural unit (A) and the structural unit (B) may preferably be in a range of former/latter of 9/1 to 1/1, more preferably from 7/1 to 1/1, and still more preferably from 5/1 to 1/1.

Chem. 2

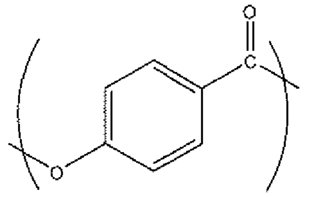

··· (A)

Chem. 3

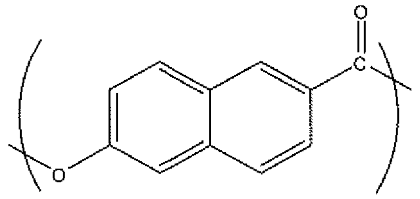

··· (B)

The total proportion of the structural units of (A) and (B) may be, based on all the structural units, for example, 65 mol% or more, more preferably 70 mol% or more, and further preferably 80 mol% or more. A liquid crystal polyester having the structural unit (B) at a proportion of 4 to 45 mol % is especially preferred among polymers.

The liquid crystal polyester may also contain a structural unit derived from 4-hydroxybenzoic acid as an aromatic hydroxycarboxylic acid, a structural unit derived from an aromatic dicarboxylic acid and a structural unit derived from an aromatic diol. For example, the structural unit derived from aromatic dicarboxylic acid may be at least one unit selected from the group consisting of the following formulae (C) and (D). The structural unit derived from aromatic diol may be at least one unit selected from the group consisting of the following formulae (E) and (F). Preferable one may include a liquid crystal polyester comprising a structural unit (A) derived from 4-hydroxybenzoic acid (formula (A) above), a structural unit (C) derived from terephthalic acid (formula (C) below) and a structural unit (D) derived from isophthalic acid (formula (D) below) as an aromatic dicarboxylic acid, and a structural unit (E) derived from 4,4'-dihydroxybiphenyl (formula (E) below) as an aromatic diol, and a liquid crystal polyester comprising a structural unit (A) derived from 4-hydroxybenzoic acid (formula (A) above), a structural unit (C) derived from terephthalic acid (formula (C) below) and a structural unit (D) derived from isophthalic acid (formula (D) below) as an aromatic dicarboxylic acid, and a structural unit (E) derived from 4,4'-dihydroxybiphenyl (formula (E) below) and a structural unit (F) derived from hydroquinone (formula (F) below) as an aromatic diol, and the like.

Chem. 4

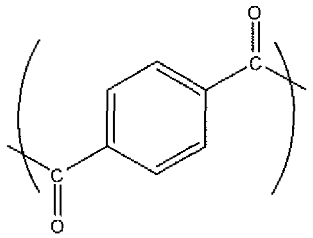

··· (C)

Chem. 5

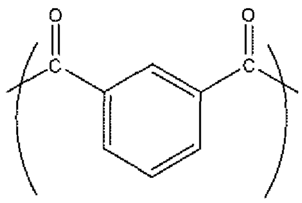

··· (D)

Chem. 6

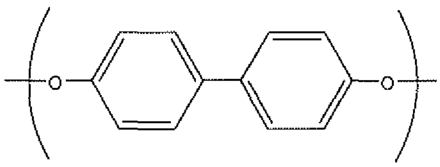

··· (E)

Chem. 7

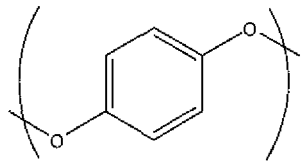

··· (F)

The liquid crystal polyester may contain a structural unit derived from 4-hydroxybenzoic acid, preferably at a proportion of 50 mol% or more, more preferably 53 mol% or more, and even more preferably 60 mol% or more. The upper limit of the content of the structural unit derived from 4-hydroxybenzoic acid in the liquid crystal polyester is not particularly limited, and may be, for example, 90 mol% or less, preferably 88 mol% or less, and more preferably 85 mol% or less.

The liquid crystal polyester used in the present invention may preferably have a melting point (hereinafter sometimes referred to as $Mp_0$) in the range from 250 to 380°C, more preferably from 255 to 370°C, and further preferably from 260 to 360°C. In addition, from the viewpoint of using the obtained liquid crystal polyester fiber as a heat-fusible fiber, the melting point of the liquid crystal polyester may be more preferably from 250 to 330°C and even more preferably from 260 to 320°C. The melting point here refers to a main endothermic peak temperature determined and observed using a differential scanning calorimeter (DSC; "TA3000" produced by Mettler-Toledo International Inc.) in accordance with the JIS K 7121 test method. Specifically, 10 to 20 mg of a sample is encapsulated in an aluminum pan and taken into the aforementioned DSC device. Then the temperature is elevated at a rate of 20°C/min while supplying nitrogen as a carrier gas at a flow rate of 100 mL/min to measure an endothermic peak. Depending on the type of polymer, some polymers may not show a clear peak in the 1st run of DSC measurement. If no clear peak appears in the 1st run of DSC measurement, the sample is heated up to a temperature 50°C higher than the expected flow temperature in a temperature elevation rate of 50°C/min. After keeping the temperature for 3 minutes so as to make the sample completely molten, the sample is cooled at a cooling rate of 80°C/min to 50°C, and then is elevated at 20°C/min to measure the endothermic peak thereof.

It should be noted that the liquid crystal polyester fiber may contain thermoplastic polymers, such as a polyethylene terephthalate, a modified-polyethylene terephthalate, a polyolefin, a polycarbonate, a polyamide, a polyphenylene sulfide, a polyether ether ketone, a fluoro-resin, and others, as long as the effect of the present invention is not impaired. In addition, the liquid crystal polyester fiber may contain various additives including: inorganic substances such as titanium oxide, kaolin, silica, and barium oxide; carbon black; a colorant such as dyes and paints; an antioxidant; an ultraviolet-ray absorbent; a light stabilizer; etc.

The liquid crystal polyester fiber according to the present invention may contain a metal catalyst that acts on decarboxylation reaction of an aromatic carboxylic acid. From the viewpoint of control of side reactions, for example, the content of copper, cobalt, and palladium may be less than 10 ppm by weight, preferably less than 5 ppm by weight, and more preferably less than 1 ppm by weight.

The liquid crystal polyester fiber according to the present invention may contain a liquid crystal polyester at a proportion of 50 wt% or more, preferably 80 wt% or more, more preferably 90 wt% or more, still more preferably 95 wt% or more, and further more preferably 99.9 wt% or more.

The liquid crystal polyester fiber according to the present invention has a total amount of carboxy end groups (total CEG amount) of 5.0 mEq/kg or less. In the present invention, the total CEG amount means the amount of carboxy groups existing at the ends of the liquid crystal polyester molecules in 1 kg of the liquid crystal polyester fiber, and is a value measured by the method described in the Examples below. For example, as the carboxy end groups in liquid crystal polyester, carboxy groups that do not participate in reaction and remain in the terminal structural units derived from monomers having carboxy groups, such as aromatic hydroxycarboxylic acids and aromatic dicarboxylic acids, may

be exemplified.

From the viewpoint of reducing the amount of gas generation at the time of heating, the liquid crystal polyester fiber according to the present invention may have a total CEG amount of preferably 4.0 mEq/kg or less, more preferably 3.0 mEq/kg or less, further preferably 2.5 mEq/kg or less, and still more preferably 2.0 mEq/kg or less. The lower limit of the total CEG amount is not particularly limited to a specific one, and the total CEG amount may be, for example, 0.1 mEq/kg or more.

The liquid crystal polyester fiber according to the present invention has a ketone bond amount of 0.05 mol% or less. In the present invention, the ketone bond amount indicates a ratio of a molar amount of ketone bonds based on a total molar amount of ester bonds and ketone bonds (molar amount of ketone bonds / (molar amount of ester bonds + molar amount of ketone bonds)), and is a value measured by the method described in the Examples below. The inventors of the present invention have found that when a liquid crystal polyester resin is melt-processed, ketone bonds are formed from ester bonds by side reactions, and that the ketone bonds affect the hue of the liquid crystal polyester fiber. Therefore, in the liquid crystal polyester fiber according to the present invention, the formation of ketone bonds is suppressed. From the viewpoint of making the liquid crystal polyester fiber have excellent hue, the ketone bond amount may be preferably 0.04 mol% or less and more preferably 0.03 mol% or less. The lower limit of the ketone bond amount is not particularly limited to a specific one, and the ketone bond amount may be, for example, 0.005 mol% or more.

In general, liquid crystal polyester fibers can exhibit very high mechanical properties by increasing the molecular weight of the polymer through solid-phase polymerization by heat treatment of an as-spun yarn (as-spun filament) obtained by the melt-spinning. The liquid crystal polyester fiber according to the present invention, however, may have a tenacity to be processed as heat-fusible fibers for producing fiber-reinforced molded bodies. The liquid crystal polyester fiber according to the present invention may be, for example, an as-spun yarn or a heat-treated yarn subjected to solid phase polymerization to an extent that does not impair the effect of the present invention. Considering that a melting point of a liquid crystal polyester fiber increases from a melting point (Mp) of an as-spun yarn due to solid-phase polymerization, the liquid crystal polyester fiber according to the present invention may be preferably an as-spun yarn when used as a heat-fusible fiber.

The liquid crystal polyester fiber according to the present invention may have a total amount of one-end groups of 50 mEq/kg or more, preferably 60 mEq/kg or more, and more preferably 70 mEq/kg or more. The total amount of one-end groups indicates the number of polymer chains, and is used as an index by which a molecular weight is evaluated. Considering the difficulty in quantifying all kinds of end groups constituting the liquid crystal polyester depending on the monomer constitution of the liquid crystal polyester, in the present invention, the total amount of one-end groups is defined as a value obtained by dividing a total amount (mEq/kg) of carboxy end groups derived from hydroxycarboxylic acids and end groups from which carbon dioxide was eliminated by decarboxylation reaction from carboxy groups derived from hydroxycarboxylic acids in 1 kg of the liquid crystal polyester fibers, by a molar ratio of structural units derived from the hydroxycarboxylic acids to all the structural units in the liquid crystal polyester (molar amount of structural units derived from hydroxycarboxylic acids / molar amount of all structural units). The total amount of one-end groups is a value measured by the method described in the Examples below. Where the total amount of one-end groups is within the above range, the polymerization of the liquid crystal polyester has not proceeded more than necessary, and the liquid crystal polyester fiber contains the liquid crystal polyester with a relatively low molecular weight. Such a liquid crystal polyester fiber can be used as a heat-fusible fiber. The upper limit of the total amount of one-end groups is not particularly limited to a specific one, and may be, for example, 100 mEq/kg or less, and preferably 90 mEq/kg or less because too reduced molecular weight may cause impossibility of obtaining fibers with tenacity required for later procedures.

From the viewpoint of using the liquid crystal polyester fiber according to the present invention as a heat-fusible fiber, the liquid crystal polyester fiber does not have to have a high tenacity, and may have, for example, a tenacity of lower than 18 cN/dtex, preferably 2 to 16 cN/dtex, and more preferably 6 to 12 cN/dtex. Here, the tenacity of the liquid crystal polyester fiber is a tensile tenacity, and is a value measured by the method described in the Examples below.

From the viewpoint of using the liquid crystal polyester fiber according to the present invention as a heat-fusible fiber, the liquid crystal polyester fiber may have a melting point of 380°C or lower, preferably from 250 to 350°C, and more preferably from 260 to 300°C. Here, the melting point of the liquid crystal polyester fiber is a value measured by the method described in the Examples below.

The liquid crystal polyester fiber according to the present invention may have an adjusted single fiber fineness depending on the application, etc. The single fiber fineness, for example, may be 0.5 to 50 dtex, preferably from 1.0 to 35 dtex, more preferably 1.0 to 15 dtex, and even more preferably 1.5 to 10 dtex.

The liquid crystal polyester fiber according to the present invention may be a monofilament or a multifilament. In the case of multifilament, the number of filaments may be adjusted depending on the application, etc. For example, the number of filaments may be 2 to 5000 filaments, preferably 3 to 4000 filaments, and more preferably 5 to 3000 filaments.

The total fineness of the liquid crystal polyester fiber according to the present invention can be adjusted depending on the application, etc. For example, the total fineness may be 1 to 50000 dtex, preferably 5 to 10000 dtex, more preferably 10 to 2000 dtex, and further preferably 10 to 600 dtex.

The liquid crystal polyester fiber according to the present invention may have an amount of $CO_2$ gas generation, as measured by the method described in the Examples below, of 2.0 mmol/kg or less, preferably 1.5 mmol/kg or less, and more preferably 1.0 mmol/kg or less.

The liquid crystal polyester fiber according to the present invention has excellent hue since the ketone bond amount thereof can be reduced to be small, and may have an L* value of, for example, 78 or higher, preferably 79 or higher, more preferably 80 or higher. The L* value is an L* value representing a lightness in the L*a*b* color system standardized by the International Commission on Illumination (CIE), and is a value measured by the method described in the Examples below. The higher the L* value is, the lighter the color is, and the lower the L* value is, the darker the color is. The upper limit of the L* value is not particularly limited to a specific one, and the L* value may be, for example, 85 or lower.

The liquid crystal polyester fiber according to the present invention can reduce the surface roughness of the fiber, perhaps since the amount of ketone bonds can be reduced to be small, although the reason is not clear. The surface roughness of the liquid crystal polyester fiber affects the processability and adhesiveness with reinforcing fibers when used as a heat-fusible fiber, leading to a decrease in physical properties of a fiber-reinforced composite. For example, a surface roughness Ra may be 1.0 μm or less, preferably 0.8 μm or less, and more preferably 0.6 μm or less. The lower limit of the surface roughness Ra is not particularly limited to a specific one, and the surface roughness Ra may be, for example, 0.1 μm or more. The surface roughness Ra is an arithmetic mean roughness measured according to JIS B 0601-2001, and represents the unevenness state of a section in a roughness profile of a sampling length as the average of the absolute values of deviation from a mean line to the roughness profile. The surface roughness Ra is measured by the method described in the Examples below.

Method for Producing Liquid Crystal Polyester Fiber

A method for producing the liquid crystal polyester fiber according to the present invention is not particularly limited to a specific one as long as the total CEG amount and the ketone bond amount of the liquid crystal polyester fiber can be adjusted to the specific amounts as described above, and may at least include melt-kneading the liquid crystal polyester in an extruder to obtain a melt-kneaded material, and spinning by discharging the melt-kneaded material from a spinneret.

One method for adjusting the total CEG amount and the ketone bond amount of the liquid crystal polyester fiber is, for example, to adjust a heating temperature and a residence time in the extruder in relation to a melting point of the liquid crystal polyester to be fed. For example, in the method for producing the liquid crystal polyester fiber according to the present invention, a thermal history TH represented by the following formula (1) may be 250 to 1100 in the melt-kneading step.

Math. 2

$$TH = \sum_{x=y+1}^{M} \{T_x - (Mp_0 + 10)\} \qquad (1)$$

In the formula, $Mp_0$ denotes a melting point (°C) of the liquid crystal polyester; x denotes the time (minutes), where x = 0 is defined as a time when the liquid crystal polyester is fed into the extruder, x = 1, 2,... is defined as each time during residence, and x = M is defined as a time when the melt-kneaded material is discharged from the spinneret; $T_x$ ($T_1$, $T_2$,..., $T_M$) denotes each heating temperature (°C) every minute in a residence time from feeding to discharging; and y denotes a staying time (minutes) in a heating temperature region where $T_x \leq (Mp_0 + 10)$ after feeding. It should be noted that when M and y are not integers, M and y are rounded off and calculated as integers, and M is an integer satisfying $M \geq y + 1$.

As described later, TH represented by the above formula (1) means an index regarding a thermal history indicating the extent to which the liquid crystal polyester is exposed to high temperatures that cause decarboxylation reaction of the carboxy groups at the ends of the molecular and side reactions of the ester bonds during the residence time from when the liquid crystal polyester is fed into the extruder to when the liquid crystal polyester is discharged as a melt-kneaded material from the spinneret.

The inventors of the present invention have found that where a carboxy group exists at the end of the liquid crystal polyester, decarboxylation reaction occurs at the carboxy group and carbon dioxide is generated as thermal decomposition gas when the liquid crystal polyester fiber is used as a heat-fusible fiber and heated. Therefore, the inventors have found that in the method for producing the liquid crystal polyester fiber, by melt-kneading at a high

temperature in the extruder for a long period of time, the decarboxylation reaction of the carboxy groups at the ends of the liquid crystal polyester molecular can be caused to proceed in advance, thereby reducing the carboxy groups at the ends of the liquid crystal polyester molecular. However, the inventors have found that melt-kneading at a high temperature for a long period of time causes side reactions of the ester bonds of the liquid crystal polyester, resulting in the formation of ketone bonds. Therefore, in the present invention, the thermal history of the liquid crystal polyester is adjusted by the heating temperature and the residence time in relation to the melting point of the liquid crystal polyester, thereby making it possible to suppress the side reactions of the ester bonds while causing the decarboxylation reaction of the carboxy groups at the ends of the liquid crystal polyester molecular to proceed.

The method for producing the liquid crystal polyester fiber will be described below with reference to Fig. 1. Fig. 1 is a schematic diagram showing an apparatus 100 used for producing a liquid crystal polyester fiber according to one embodiment of the present invention. As shown in Fig. 1, the apparatus 100 includes an extruder 10, a gear pump 30, a spinning head 40, and pipes 20 connecting these components. The extruder 10 includes a hopper 11 for feeding a liquid crystal polyester, a barrel 12, a screw 13 which rotates in the barrel 12, and vents 14. Although Fig. 1 illustrates the equipment necessary to describe the method for producing the liquid crystal polyester fiber according to the present invention, the apparatus 100 may include other equipment as needed.

In Fig. 1, a solid liquid crystal polyester fed from the hopper 11 is conveyed in the barrel 12 in an X direction, which is a travelling direction, by rotation of the screw 13, and is heated by a known heating means such as a heater installed at the barrel 12. In addition to the heat transfer from the heating means, mechanical energy such as friction and shear is efficiently applied between an inner wall of the barrel 12 and the screw 13, thereby melting the solid liquid crystal polyester as the solid liquid crystal polyester travels in the X direction. Then, the liquid crystal polyester in a melted state is metered by the gear pump 30, passes through the pipes 20, is conveyed to the spinning head 40, and is discharged through a spinneret 41 at a predetermined spinning temperature, and the obtained yarn is wound, whereby the liquid crystal polyester fiber can be produced. The liquid crystal polyester may be fed into the extruder 10 as a resin composition containing the above-described thermoplastic polymer, various additives, catalyst, etc.

Regarding the thermal history of the liquid crystal polyester in the apparatus 100, the thermal history affecting the decarboxylation reaction of the carboxy groups at the ends of the liquid crystal polyester molecular and the side reactions of the ester bonds can be recognized as TH represented by the above formula (1).

First, the liquid crystal polyester fed from the hopper 11 begins to remain at $x = 0$ (minutes). In the barrel 12, the liquid crystal polyester is heated as the liquid crystal polyester travels in the X direction. Where the heating temperature $T_x$ in the apparatus 100 is obtained every minute with x as an integer of 1 or greater, the heating temperature $T_x$ indicates the temperature of the part of the apparatus 100 where the liquid crystal polyester is located after the elapse of x minutes from the time when the liquid crystal polyester is fed into the extruder 10, during the residence time M. The location of the liquid crystal polyester after the elapse of x minutes from the feeding is represented as a location separated from the feeding location in the X direction by a distance by which the liquid crystal polyester is conveyed for x minutes. This distance can be calculated from the volume of the apparatus 100, the conveyance rate of the screw 13, the conveyance rate of the gear pump 30, a predetermined time of x minutes, etc.

In the above formula (1), the residence time M indicates the time for which the liquid crystal polyester remains in the apparatus 100 from the time when the liquid crystal polyester is fed from the hopper 11 into the extruder 10 until the liquid crystal polyester is discharged as a melt-kneaded material from the spinneret 41. The residence time M can be calculated on the basis of the volume of the entire apparatus 100 from the time when the liquid crystal polyester is fed until the liquid crystal polyester is discharged, the conveyance rate of the gear pump 30, etc. For example, the residence time M can be calculated from a formula of the volume [$cm^3$] of the entire apparatus (in Fig. 1, barrel 12 + pipes 20 + gear pump 30 + spinning head 40) / { (gear pump rotation speed [RPM] $\times$ conveyance volume [$cm^3$] per gear pump rotation speed)), and if the calculated residence time M is not an integer, the residence time M is rounded off and calculated as an integer.

Immediately after feeding into the hopper 11, the heating temperature $T_x$ has not risen sufficiently relative to the melting point $Mp_0$ of the liquid crystal polyester and does not affect the thermal history, so that the thermal history up to the time y (minutes), in the residence time M, for which the liquid crystal polyester remains in an initial low temperature region at a temperature equal to or lower than $Mp_0$ + 10°C, is not taken into consideration. Therefore, in the above formula (1), a sum from $x = y + 1$ is calculated. The time y can be calculated on the basis of the volume of the apparatus, the conveyance rate of the gear pump, the region set at a low temperature, etc., and if the calculated y is not an integer, y is rounded off and calculated as an integer.

In order to facilitate the decarboxylation reaction of the carboxy groups at the ends of the liquid crystal polyester, it is preferable to heat and melt (melt-heat) the liquid crystal polyester at a temperature higher than $Mp_0$ + 10°C. In order to bring the liquid crystal polyester from a solid state to a melted state in the extruder as the liquid crystal polyester travels in the X direction, it is common practice to increase the temperature in each region toward the X direction. Therefore, where heating and melting the liquid crystal polyester at a temperature higher than $Mp_0$ + 10°C, the temperature in the extruder 10 is set to start at a temperature equal to or lower than $Mp_0$ + 10°C, then the set temperature is increased

toward the X direction, and is set to a temperature higher than $Mp_0$ + 10°C. In addition, when conveying the liquid crystal polyester from the extruder 10 toward the spinning head 40, from the viewpoint of adjusting the viscosity of the liquid crystal polyester in the melted state, the temperature outside the extruder 10 (at the pipes 20, the gear pump 30, and the spinning head 40) may be a temperature equal to or lower than the highest temperature in the extruder 10, but it is preferable to heat the liquid crystal polyester at a temperature higher than $Mp_0$ + 10°C. In that case, where x is 1 to y, $T_x$ satisfies the relationship of $T_x \leq (Mp_0 + 10)$, and where x is y + 1 to M, $T_x$ all satisfies the relationship of $T_x > (Mp_0 + 10)$. Therefore, TH indicates a temperature sum obtained by adding up $T_x - (Mp_0 + 10)$, which is a positive value, for all cases of time x that satisfies the relationship of $T_x > (Mp_0 + 10)$, in the residence time M.

Where heating the liquid crystal polyester at a temperature higher than $Mp_0$ + 10°C, the side reactions of the ester bonds proceed simultaneously in addition to the decarboxylation reaction. Therefore, $T_x - (Mp_0 + 10)$ in the above formula (1) is an index indicating the extent to which the liquid crystal polyester is exposed to high temperatures, as a temperature condition for causing the decarboxylation reaction of the carboxy groups at the ends of the liquid crystal polyester molecular and the side reactions of the ester bonds. That is, TH means an index regarding a thermal history indicating the extent to which the liquid crystal polyester is exposed to high temperatures that cause the decarboxylation reaction of the carboxy groups at the ends of the liquid crystal polyester molecular and the side reactions of the ester bonds during the residence time from when the liquid crystal polyester is fed into the extruder 10 to when the liquid crystal polyester is discharged as a melt-kneaded material from the spinneret 41.

If the value of TH is excessively high, that is, if the heating temperature in the extruder is excessively high and/or the residence time is excessively long, side reactions of the ester bonds of the liquid crystal polyester occur excessively, the formation of ketone bonds cannot be suppressed, and the ketone bond amount increases, so that the hue and the surface roughness of the fiber tend to deteriorate. If the value of TH is relatively high, the decarboxylation reaction of the carboxy groups at the ends of the liquid crystal polyester proceeds sufficiently, so that the total CEG amount decreases and the amount of gas generation upon heating is small.

On the other hand, if the value of TH is excessively low, that is, if the heating temperature in the extruder is excessively low and/or the residence time is excessively short, the decarboxylation reaction of the carboxy groups at the ends of the liquid crystal polyester is less likely to proceed, the carboxy groups at the molecular ends cannot be reduced, and the total CEG amount increases, so that the amount of gas generation upon heating tends to increase. If the value of TH is relatively low, the ketone bond amount does not increase, so that the hue and the surface roughness of the fiber do not deteriorate.

From the viewpoint of reducing the carboxy groups at the ends of the liquid crystal polyester molecular, TH may be preferably 300 or higher, more preferably 350 or higher, and further preferably 400 or higher. From the viewpoint of suppressing the formation of ketone bonds, TH may be preferably 1000 or lower, more preferably 950 or lower, and further preferably 900 or lower.

From the viewpoint of reducing the carboxy groups at the ends of the liquid crystal polyester molecular, the residence time M may be 6 minutes or longer, preferably 8 minutes or longer, and more preferably 10 minutes or longer. From the viewpoint of suppressing the formation of ketone bonds, the residence time M may be 40 minutes or shorter, preferably 30 minutes or shorter, and more preferably 25 minutes or shorter. In addition, the time y for which the liquid crystal polyester remains in the initial low temperature region at a temperature equal to or lower than $Mp_0$ + 10°C, in the residence time M, is not particularly limited to a specific one, and may be 1 minute or longer and preferably 2 minutes or longer, and may be 5 minutes or shorter.

From the viewpoint of reducing the carboxy groups at the ends of the liquid crystal polyester molecular, the maximum temperature of $T_x$ may be $Mp_0$ + 30°C or higher, preferably $Mp_0$ + 40°C or higher, more preferably $Mp_0$ + 50°C or higher, and further preferably $Mp_0$ + 55°C or higher. From the viewpoint of suppressing the formation of ketone bonds, the maximum temperature of $T_x$ may be $Mp_0$ + 100°C or lower, preferably $Mp_0$ + 90°C or lower, and more preferably $Mp_0$ + 85°C or lower.

Since the decarboxylation reaction is caused to proceed in the extruder 10, carbon dioxide is generated as thermal decomposition gas. From the viewpoint of removing the carbon dioxide generated by the decarboxylation reaction out of the system and further facilitating the decarboxylation reaction, and from the viewpoint of reducing inclusion of the generated gas as bubbles in the fiber, it is preferable to carry out degassing by, for example, connecting a vacuum pump or the like to the vents 14 of the extruder 10 and reducing the pressure in the extruder 10. For example, the degree of vacuum in absolute pressure may be 100 kPa or lower, preferably 80 kPa or lower, and more preferably 60 kPa or lower.

As the extruder 10, known extruders such as single-screw extruders and multi-screw extruders (twin- or more-screw extruders) can be used, and twin-screw extruders are preferable from the viewpoint of improving kneadability and degassability.

After a melt-kneaded material containing the liquid crystal polyester is obtained in the extruder 10, the melt-kneaded material may be metered by the gear pump 30, fed to the spinning head 40, and discharged from the spinneret 41 for melt spinning. Melt-spinning may be carried out by a known or common method such that the melt-kneaded material can be discharged from a spinneret at a predetermined spinning temperature, and wound by a godet roller or

the like.

## Fiber Structure

The liquid crystal polyester fibers according to the present invention can be used as heat-fusible fibers for producing a molded body using the liquid crystal polyester fibers as a matrix. Where the liquid crystal polyester fibers are used as heat-fusible fibers, a fiber structure including liquid crystal polyester fibers at least in part of the fiber structure can be used as an intermediate material in the production of the molded body.

The fiber structure including the liquid crystal polyester fibers according to the present invention can be used as various fiber configurations such as staple fibers, short-cut fibers, filament yarns, spun yarns, cordage, ropes, etc., and also used as fabrics such as nonwoven fabrics, woven fabrics, knitted fabrics, etc., using liquid crystal polyester fibers. Such fibers and fabrics can be produced by known methods using liquid crystal polyester fibers.

The fiber structure according to the present invention may be made by combining liquid crystal polyester fibers with other fibers as long as the fiber structure does not impair the effect of the present invention. The fiber structure may be, for example, a combined yarn using liquid crystal polyester fibers and other fibers (e.g., a commingled yarn made from liquid crystal polyester fibers and other fibers or others). The fiber structure may also be a blend fabric using liquid crystal polyester fibers and other fibers (e.g., a combined fabric in which liquid crystal polyester fibers and other fibers are used in combination, a layered material in which a fabric of liquid crystal polyester fibers and a fabric of other fibers are used in combination, or others). Where the fiber structure is used to produce a fiber-reinforced molded body (fiber-reinforced composite), the fiber structure may be a combined yarn or blend fabric, including reinforcing fibers as other fibers.

The type of reinforcing fibers is not limited to a specific one as long as the reinforcing fibers have a melting point higher than that of the liquid crystal polyester fiber according to the present invention. Examples of reinforcing fibers may include at least one selected from the group consisting of glass fibers, carbon fibers, liquid crystal polyester fibers, aramid fibers, polyparaphenylenebenzobisoxazole fibers, polyparaphenylenebenzobisimidazole fibers, polyparaphenylenebenzobisthiazole fibers, ceramic fibers, and metal fibers. These reinforcing fibers may be used singly or in combination of two or more.

## Molded body

According to the present invention, a molded body may be obtained by molding a fiber structure. The molded body may be, for example, a molded body obtained by molding a fiber structure and containing no reinforcing fibers, or a fiber-reinforced molded body obtained by molding a fiber structure with reinforcing fibers. Since the fiber structure can be flexible, such a flexible fiber structure can be easily processed into various three-dimensional shapes, such as cylindrical or domed shapes by weaving, knitting, etc.

The molded body can be obtained by heating and molding the fiber structure at or above the melting point of the liquid crystal polyester fiber. The molding method is not particularly limited to a specific one as long as the liquid crystal polyester fibers are melted and integrated, and any of the known molding methods for molded bodies can be used. The liquid crystal polyester fibers according to the present invention have excellent hue and can suppress the generation of bubbles during heating for melt-fusing, so that a molded body having excellent appearance can be obtained.

The liquid crystal polyester constituting a matrix of the molded body has excellent vibration damping properties, so that the resulting molded body has excellent vibration damping properties and can be effectively used in applications where vibration occurs, such as duct tubes and automobile bumpers.

# EXAMPLES

Hereinafter, the present invention will be demonstrated by way of some examples that are presented only for the sake of illustration, which are not to be construed as limiting the scope of the present invention. It should be noted that in the following Examples and Comparative Examples, various properties were evaluated in the following manners.

## Total Fineness and Single Fiber Fineness

In accordance with 8.3.1 A method in JIS L 1013: 2010, liquid crystal polyester fibers were reeled into a hank (100 m in total) with 100 rounds each of which had 1 meter using a sizing reel "Wrap Reel by Motor Driven" produced by DAIEI KAGAKU SEIKI MFG. Co., Ltd., and the weight of the liquid crystal polyester fibers was measured. The measurement was conducted twice for each sample. Each of the weights (g) was multiplied by 100, and the average value was used as a total fineness (dtex) of the liquid crystal polyester fibers. In addition, this value was divided by the number of filaments in the liquid crystal polyester fibers, and the obtained quotient was used as a single fiber fineness

(dtex).

Melting Points of Fibers and Resin Chips (Granular Molded Bodies)

In accordance with JIS K 7121, measurement was performed using a differential scanning calorimeter (DSC; "TA3000" produced by Mettler-Toledo International Inc.), and the observed main endothermic peak temperature was determined as a melting point. Specifically, 10 to 20 mg of a sample was taken and sealed in an aluminum pan in the DSC device, and then a melting point was determined as an endothermic peak derived from the liquid crystal polyester when nitrogen was supplied as a carrier gas at a flow rate of 100 mL/min and the temperature was increased from 25°C at an elevation rate of 20°C/min.

Tenacity

With reference to 8.5.1 in JIS L 1013: 2010, using an autograph "AGS-100B" produced by SHIMADZU CORPORATION, a tensile test was carried out under the conditions of a test sample length of 10 cm and a tensile speed of 10 cm/min 6 times for each sample yarn to obtain an average tensile strength (cN), and a tenacity (cN/dtex) was calculated by dividing the average tensile strength (cN) by the total fineness (dtex) measured by the above-described method.

Total Amount of CEG(s)

Each of liquid crystal polyester fiber samples was subjected to freeze-grinding until having a particle size of d90 = 100 μm or less (d90: the particle size at which the cumulative volume reaches 90% in the particle size distribution), then to the ground sample was added an excess amount of n-propylamine, followed by heating under agitation at 40°C for 90 minutes to decompose the sample. In this process, the ester bonds present inside the polymer chain are decomposed into carboxylic acid n-propyl amides and hydroxy groups, while the carboxy end groups (CEG) and hydroxy end groups in the polymer chain are unchanged from the carboxy groups and hydroxy groups. The decomposition products were separated by the HPLC method, and peak areas of the separated decomposition products with carboxy groups were compared with calibration curves prepared by HPLC analysis of the respective standard samples so as to quantify the amount (mEq/kg) of the carboxy end groups derived from each of the monomers. For example, the amount of CEG derived from monovalent carboxylic acids such as 4-hydroxybenzoic acid and 6-hydroxy-2-naphthoic acid can be determined by directly quantifying 4-hydroxybenzoic acid and 6-hydroxy-2-naphthoic acid. The amount of CEG derived from divalent carboxylic acids such as terephthalic acid, isophthalic acid, and 2,6-naphthalene dicarboxylic acid can be determined by quantifying the amount of amidation products in which one of two carboxy groups is amidated, such as terephthalic acid mono-n-propyl amide, isophthalic acid mono-n-propyl amide, or 2,6-naphthalene dicarboxylic acid mono-n-propyl amide. The sum of the amounts of all carboxy end groups contained in each sample was regarded as the total carboxy end group amount (total CEG amount) (mEq/kg) of the sample.

Total Amount of One-End Groups

In the same way as the measurement of the above-mentioned total amount of CEG(s), each of the liquid crystal polyester fiber samples was decomposed with n-propylamine to determine the total amount of end groups (mEq/kg) of both carboxy end groups derived from hydroxycarboxylic acids and end groups generated by decarboxylation reaction of carboxy groups derived from hydroxycarboxylic acids. For example, the amount of end groups derived from 4-hydroxybenzoic acid can be determined by quantifying 4-hydroxybenzoic acid and phenol, and the amount of end groups derived from 6-hydroxy-2-naphthoic acid can be determined by quantifying 6-hydroxy-2-naphthoic acid and 2-naphthol. In order to take into consideration the amounts of end groups other than hydroxycarboxylic acids, such as end groups derived from diols and dicarboxylic acids, the total amount of end groups derived from hydroxycarboxylic acids was divided by a molar ratio of structural units derived from hydroxycarboxylic acids to all the structural units in the liquid crystal polyester of the sample, and the thus obtained value was regarded as the total amount of one-end groups (mEq/kg) of the sample.

Ketone Bond Amount

The ketone bond amount was calculated by the pyrolysis-gas chromatography method described in Polymer Degradation and Stability, 76, 85-94 (2002). Specifically, each of the liquid crystal polyester fiber samples was heated using a thermal decomposition device ("PY2020iD" produced by Frontier Laboratories Ltd.) in the presence of tetramethylammonium hydroxide (TMAH) so as to generate a gas by pyrolysis/methylation. The generated gas was analyzed using a gas chromatography ("GC-6890N" produced by Agilent Technologies, Inc.), and the ketone bond amount (mol%)

was calculated from a peak area derived from ketone bonds and a peak area derived from ester bonds.

Hue (L* Value)

The L* value was measured using a spectrophotometer "CM-3700A" produced by KONICA MINOLTA, INC., under the conditions of regular reflection treatment: SCE, measurement diameter: LAV (25.4 mm), UV condition: 100% Full, field of view: 2 degrees, and main light source: C light source.

Surface Roughness Ra

The arithmetic mean roughness (Ra) (in accordance with the definition described in JIS B 0601: 2001) of the fiber surface was measured using a laser microscope (control unit "VK-X200", measurement unit "VK-X210") produced by KEYENCE CORPORATION, at a magnification of 3000 times (objective 150 times × 20) at 10 points in the fiber longitudinal direction with a sampling length of 0.8 mm, and the average value of the 10 points was used as the surface roughness Ra (μm) in the present invention.

$CO_2$ Gas Generation Amount

The amount of $CO_2$ gas generation upon heating of liquid crystal polyester fibers was evaluated by the pyrolysis GC-BID method. Specifically, liquid crystal polyester fibers were subjected to freeze grinding until having a particle size of d90 = 100 μm or less, and used as a sample for analysis. The sample was treated at 300°C for 10 minutes using a gas chromatograph (GC) equipped with a pyrolyzer for sample introduction and a dielectric barrier discharge ionization detector (BID) for gas detection. From the generated gas, $CO_2$ gas was separated and detected so as to quantitate an amount of $CO_2$ gas generation. The measurement was carried out three times on the same sample, and the average value was used as the amount of $CO_2$ gas generation (mmol/kg) from the sample.

Evaluation of Bubbling Property

A knit fabric of liquid crystal polyester fibers was produced using a circular knitting machine ("MR-1", 10 cm diameter, 28 gauge, produced by Maruzen Sangyo Co., Ltd.). The produced fabric was cut into squares of 10 cm on each side, and three layers of this fabric were stacked with each other. On a polyimide film (UPILEX-S, 125S produced by Ube Industries, Ltd.) prepared as a release film, was placed a 1 mm thick SUS304 metal plate with a square hole of 10 cm on each side. Into the square hole, were inserted the above stacked three layers of the knit fabric as described above. Then, a second polyimide film (same as above) was placed on top of the metal plate. The stacked product was further clamped from above and below with a pressure of 0.1 MPa or less using a flat plate heating press device, and was contact-heated for 5 minutes at a temperature equal to the melting point of the liquid crystal polyester fibers + 20°C. Thereafter, a pressure of 2 MPa was applied to the heated product for 1 minute, and then the heated product was cooled to a temperature of 100°C or lower under an open atmosphere to obtain a liquid crystal polyester fiber-derived resin plate, which was used as a sample for appearance evaluation. The number of bubbles each having a long diameter of 1 mm or more was counted by observing a 6-cm square region at the center of the sample for appearance evaluation on the front and back surfaces using a loupe.

Example 1

Chips (granular molded bodies) of a liquid crystal polyester (α) ($Mp_0$: 281°C) in which the structural units (A) and (B) as shown in the following formulae had a ratio (A)/(B) = 73/27 (molar ratio) were used. The chips were fed into a twin-screw extruder (Φ 15 mm) ("KZW15TW-45MG-NH (-700)" produced by TECHNOVEL CORPORATION) to be melt-kneaded at a maximum temperature of 365°C, and the melt-kneaded material was fed to a spinning head with being metered by a gear pump. Here, the residence time and the temperature profile from the twin-screw extruder to the spinning head were set as shown in Table 5, and TH was adjusted to 553. In this process, a vacuum pump (dry pump "KRF40A-V-01B" produced by ORION Machinery Co., LTD.) was connected via a metal pipe to a vent portion which was provided in the middle of the twin-screw extruder, to reduce the pressure in the space not filled with the resin in the twin-screw extruder to 60 kPa.

The spinning head was equipped with a spinneret having 40 holes each having a hole diameter of 0.1 mmϕ and a land length of 0.14 mm, and the melt-kneaded material was discharged from the spinneret at a discharge rate of 22.0 g/min and wound onto a bobbin at a winding rate of 1000 m/min to obtain liquid crystal polyester fibers (as-spun yarn). At this time, a 2 wt% aqueous solution of sodium dodecyl phosphate (produced by from FUJIFILM Wako Pure

Chemical Corporation, Wako first grade) was applied to the as-spun yarns through an oiling guide placed directly below the spinneret. The amount of the aqueous solution applied was l.4 g/min, and the adhesion proportion of sodium dodecyl phosphate to the as-spun yarns was 0.1 wt% as a calculation value. The analysis results of the obtained liquid crystal polyester fibers are shown in Table 7.

Chem. 8

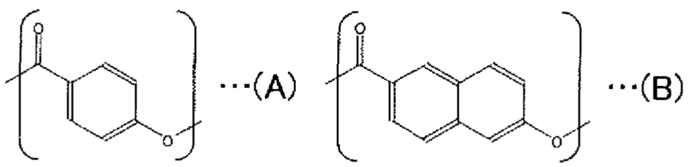

Table 5

| | X | $T_x$ | Tx - ($Mp_0$ + 10) | TH |
|---|---|---|---|---|
| Example 1 | 1 | 260 | - | 553 |
| | 2 | 260 | - | |
| | 3 | 365 | 74 | |
| | 4 | 365 | 74 | |
| | 5 | 365 | 74 | |
| | 6 | 365 | 74 | |
| | 7 | 365 | 74 | |
| | 8 | 365 | 74 | |
| | 9 | 310 | 19 | |
| | 10 | 310 | 19 | |
| | 11 | 310 | 19 | |
| | 12 | 310 | 19 | |
| | 13 | 310 | 19 | |
| | 14 | 305 | 14 | |

The method for calculating TH will be described with the production conditions of Example 1 as an example. Table 5 shows the values of the heating temperature $T_x$ every minute in the residence time M, $T_x$ - ($Mp_0$ + 10) in the formula (1), and TH in Example 1. In Example 1, $Mp_0$ is 281°C, and thus the condition of $T_x \leq (Mp_0 + 10)$ is satisfied when x is 1 to 2 at which $T_x$ is 260°C. Therefore, the staying time y is 2, and $T_x$ - ($Mp_0$ + 10) indicates a positive value when x is equal to or greater than y + 1 (i.e., 3). As the value of TH, 553 can be calculated by adding up all the respective values of $T_x$ - ($Mp_0$ + 10) when x is y + 1 to M (i.e., 3 to 14). The same calculation was also performed in the following Examples and Comparative Examples.

Example 2

Liquid crystal polyester fibers (as-spun yarn) were obtained in the same manner as in Example 1, except that TH was adjusted to 403 by setting the maximum temperature in the twin-screw extruder to 340°C and changing the temperature profile. The analysis results of the obtained liquid crystal polyester fibers are shown in Table 7.

Example 3

Liquid crystal polyester fibers (as-spun yarn) were obtained in the same manner as in Example 1, except that TH was adjusted to 335 by setting the residence time to 11 minutes, setting the maximum temperature in the twin-screw extruder to 340°C, and changing the temperature profile, and that a melt-kneaded material was discharged at a discharge

rate of 28.0 g/min using a spinneret having 100 holes each having a hole diameter of 0.1 mmϕ and a land length of 0.14 mm, and was wound at a winding rate of 500 m/min. The analysis results of the obtained liquid crystal polyester fibers are shown in Table 7.

Example 4

Liquid crystal polyester fibers (as-spun yarn) were obtained in the same manner as in Example 1, except that TH was adjusted to 996 by setting the residence time to 27 minutes, setting the maximum temperature in the twin-screw extruder to 360°C, and changing the temperature profile. The analysis results of the obtained liquid crystal polyester fibers are shown in Table 7.

Example 5

Liquid crystal polyester fibers (as-spun yarn) were obtained in the same manner as in Example 1, except that TH was adjusted to 435 by setting the residence time to 11 minutes, setting the maximum temperature in the twin-screw extruder to 360°C, and changing the temperature profile, and that a melt-kneaded material was discharged at a discharge rate of 56.0 g/min using a spinneret having 100 holes each having a hole diameter of 0.1 mmϕ and a land length of 0.14 mm. The analysis results of the obtained liquid crystal polyester fibers are shown in Table 7.

Example 6

Liquid crystal polyester fibers (as-spun yarn) were obtained in the same manner as in Example 1, except that TH was adjusted to 836 by setting the residence time to 27 minutes, setting the maximum temperature in the twin-screw extruder to 340°C, and changing the temperature profile, and that a melt-kneaded material was discharged at a discharge rate of 11.0 g/min using a spinneret having 20 holes each having a hole diameter of 0.125 mmϕ and a land length of 0.175 mm, and five of the 20 discharged yarns were separated and wound at a winding rate of 1000 m/min. The analysis results of the obtained liquid crystal polyester fibers are shown in Table 7.

Example 7

Liquid crystal polyester fibers (as-spun yarn) were obtained in the same manner as in Example 6, except that TH was adjusted to 926 by setting the residence time to 27 minutes, setting the maximum temperature in the twin-screw extruder to 360°C, and changing the temperature profile. The analysis results of the obtained liquid crystal polyester fibers are shown in Table 7.

Example 8

Chips of a liquid crystal polyester (α) were fed into a single screw extruder (Φ 30 mm) ("Model 3VSE-30-32N", produced by Osaka Seiki Co., Ltd.) to be melt-kneaded at a maximum temperature of 340°C, and the melt-kneaded material was fed to a spinning head with being metered by a gear pump. Here, the residence time and the temperature profile from the single-screw extruder to the spinning head were set as shown in Table 6, and TH was adjusted to 452.

Liquid crystal polyester fibers (as-spun yarn) were obtained in the same manner as in Example 1, except that the spinning head was equipped with a spinneret having 100 holes each having a hole diameter of 0.1 mmϕ and a land length of 0.14 mm, and that a melt-kneaded material was discharged from the spinneret at a discharge rate of 28.0 g/min and wound at a winding rate of 500 m/min. The analysis results of the obtained liquid crystal polyester fibers are shown in Table 7.

Table 6

| | x | Tx | $T_x$-($Mp_0$ + 10) | TH |
|---|---|---|---|---|
| Example 8 | 1 | 260 | - | 452 |
| | 2 | 260 | - | |
| | 3 | 340 | 49 | |
| | 4 | 340 | 49 | |
| | 5 | 340 | 49 | |
| | 6 | 340 | 49 | |
| | 7 | 340 | 49 | |
| | 8 | 340 | 49 | |
| | 9 | 340 | 49 | |
| | 10 | 310 | 19 | |
| | 11 | 310 | 19 | |
| | 12 | 310 | 19 | |
| | 13 | 310 | 19 | |
| | 14 | 310 | 19 | |
| | 15 | 305 | 14 | |

Example 9

Liquid crystal polyester fibers (as-spun yarn) were obtained in the same manner as in Example 1, except that a liquid crystal polyester (β) ($Mp_0$: 348°C) in which a molar ratio of the respective structural units shown in the following formulae was (A)/(C)/(D)/(E) = 65/10/5/20 was used instead of the liquid crystal polyester (α) described in Example 1, and that TH was adjusted to 308 by setting the residence time to 21 minutes, setting the maximum temperature in the twin-screw extruder to 380°C, and changing the temperature profile. The analysis results of the obtained liquid crystal polyester fibers are shown in Table 7.

Chem. 9

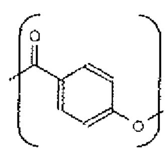 ···(A)

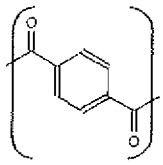 ···(C)

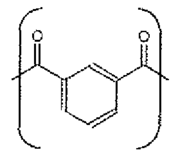 ···(D)

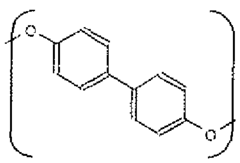 ···(E)

Example 10

Liquid crystal polyester fibers (as-spun yarn) were obtained in the same manner as in Example 1, except that a liquid crystal polyester (γ) ($Mp_0$: 315°C) in which a molar ratio of the respective structural units shown in the following formulae was (A)/(C)/(D)/(E)/(F) = 54/15/8/16/7 was used instead of the liquid crystal polyester (α) described in Example 1, and that TH was adjusted to 375 by setting the residence time to 21 minutes, setting the maximum temperature in the twin-screw extruder to 360°C, and changing the temperature profile. The analysis results of the obtained liquid crystal polyester fibers are shown in Table 7.

Chem. 10

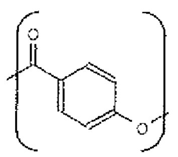 ···(A) 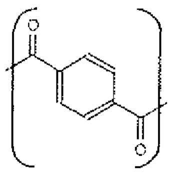 ···(C) 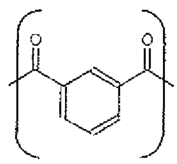 ···(D)

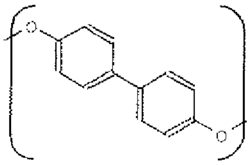 ···(E) 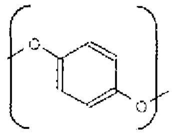 ···(F)

Comparative Example 1

Liquid crystal polyester fibers (as-spun yarn) were obtained in the same manner as in Example 1, except that TH was adjusted to 160 by setting the residence time to 11 minutes, setting the maximum temperature in the twin-screw extruder to 3 10°C, and changing the temperature profile, and that a melt-kneaded material was discharged at a discharge rate of 28.0 g/min using a spinneret having 100 holes each having a hole diameter of 0.1 mmϕ and a land length of 0.14 mm, and was wound at a winding rate of 500 m/min. The analysis results of the obtained liquid crystal polyester fibers are shown in Table 7.

Comparative Example 2

Liquid crystal polyester fibers (as-spun yarn) were obtained in the same manner as in Example 1, except that TH was adjusted to 193 by setting the maximum temperature in the twin-screw extruder to 310°C and changing the temperature profile. The analysis results of the obtained liquid crystal polyester fibers are shown in Table 7.

Comparative Example 3

Liquid crystal polyester fibers (as-spun yarn) were obtained in the same manner as in Example 6, except that TH was adjusted to 56 by setting the residence time to 5 minutes, setting the maximum temperature in the twin-screw extruder to 310°C, and changing the temperature profile. The analysis results of the obtained liquid crystal polyester fibers are shown in Table 7.

Comparative Example 4

Liquid crystal polyester fibers (as-spun yarn) were obtained in the same manner as in Example 1, except that TH was adjusted to 1355 by setting the residence time to 22 minutes, setting the maximum temperature in the twin-screw extruder to 370°C, and changing the temperature profile, and that a melt-kneaded material was discharged at a discharge rate of 14.0 g/min using a spinneret having 100 holes each having a hole diameter of 0.1 mmϕ and a land length of 0.14 mm, and was wound at a winding rate of 250 m/min. The analysis results of the obtained liquid crystal polyester fibers are shown in Table 7.

Comparative Example 5

Liquid crystal polyester fibers (as-spun yarn) were obtained in the same manner as in Example 8, except that TH was adjusted to 246 by setting the residence time to 11 minutes, setting the maximum temperature in the single-screw extruder to 340°C, and changing the temperature profile. The analysis results of the obtained liquid crystal polyester fibers are shown in Table 7.

Comparative Example 6

Liquid crystal polyester fibers (as-spun yarn) were obtained in the same manner as in Comparative Example 5, except that TH was adjusted to 1284 by setting the residence time to 23 minutes, setting the maximum temperature in the single-screw extruder to 360°C, and changing the temperature profile. The analysis results of the obtained liquid crystal polyester fibers are shown in Table 7.

Table 7

| | Production conditions | | | | | | Fiber analysis value (as-spun yam) | | | | | | | Evaluation | | | |
|---|---|---|---|---|---|---|---|---|---|---|---|---|---|---|---|---|---|
| | Liquid crystal polyester | Melting point $Mp_0$ | Extruder | Highest temperature | Residence time M | TH | Total fineness | Single fiber fineness | Number of filaments | Tenacity | Total amount of one-end groups | Total CEG amount | Ketone bond amount | $CO_2$ gas generation amount | Bubbling property | Hue L* value | Surface roughness Ra |
| | Type | °C | Type | °C | minutes | | dtex | dtex | | cN/dtex | mEq/kg | mEq/kg | mol% | mmol/kg | count | | μm |
| Ex. 1 | α | 281 | Twin-screw | 365 | 14 | 553 | 220 | 5.5 | 40 | 9.1 | 76.9 | 1.3 | 0.027 | 0.6 | 0 | 80 | 0.5 |
| Ex. 2 | α | 281 | Twin-screw | 340 | 14 | 403 | 220 | 5.5 | 40 | 9.3 | 66.7 | 2.8 | 0.019 | 0.7 | 0 | 80 | 0.4 |
| Ex. 3 | α | 281 | Twin-screw | 340 | 11 | 335 | 560 | 5.5 | 100 | 9.6 | 64.5 | 3.4 | 0.022 | 0.8 | 0 | 81 | 0.4 |
| Ex. 4 | α | 281 | Twin-screw | 360 | 27 | 996 | 220 | 5.5 | 40 | 8.9 | 80.0 | 2.4 | 0.049 | 0.7 | 0 | 79 | 0.5 |
| Ex. 5 | α | 281 | Twin-screw | 360 | 11 | 435 | 560 | 5.5 | 100 | 9.5 | 76.9 | 4.9 | 0.023 | 0.7 | 1 | 80 | 0.4 |
| Ex. 6 | α | 281 | Twin-screw | 340 | 27 | 836 | 28 | 5.5 | 5 | 8.8 | 71.4 | 2.8 | 0.023 | 0.7 | 0 | 79 | 0.5 |
| Ex. 7 | α | 281 | Twin-screw | 360 | 27 | 926 | 28 | 5.5 | 5 | 9.0 | 76.9 | 3.2 | 0.045 | 0.7 | 0 | 79 | 0.6 |
| Ex. 8 | α | 281 | Single-screw | 340 | 15 | 452 | 560 | 5.5 | 100 | 8.8 | 74.1 | 2.2 | 0.030 | 0.6 | 2 | 82 | 0.5 |
| Ex. 9 | β | 348 | Twin-screw | 380 | 21 | 308 | 220 | 5.5 | 40 | 8.9 | 76.9 | 1.8 | 0.022 | 0.7 | 0 | 78 | 0.4 |
| Ex. 10 | γ | 315 | Twin-screw | 360 | 21 | 375 | 220 | 5.5 | 40 | 9.3 | 74.1 | 2.6 | 0.023 | 0.7 | 0 | 78 | 0.5 |
| Com. Ex. 1 | α | 281 | Twin-screw | 310 | 11 | 160 | 560 | 5.5 | 100 | 9.5 | 71.4 | 5.6 | 0.018 | 1.4 | 4 | 82 | 0.3 |
| Com. Ex. 2 | α | 281 | Twin-screw | 310 | 14 | 193 | 220 | 5.5 | 40 | 9.3 | 74.1 | 7.2 | 0.014 | 1.2 | 5 | 79 | 0.3 |

(continued)

| | Production conditions | | | | | | Fiber analysis value (as-spun yam) | | | | | | | Evaluation | | | |
|---|---|---|---|---|---|---|---|---|---|---|---|---|---|---|---|---|---|
| | Liquid crystal polyester | Melting point $Mp_0$ | Extruder | Highest tempera-ture | Resi-dencetime M | TH | Total fineness | Single fiber fineness | Number of filaments | Tenacity | Total amount of one-end groups | Total CEG amount | Ketone bond amount | $CO_2$ gas genera-tion amount | Bubbling property | Hue L* val-ue | Surface rough-ness Ra |
| | Type | °C | Type | °C | minutes | | dtex | dtex | | cN/dtex | mEq/kg | mEq/kg | mol% | mmol/kg | count | | μm |
| Com. Ex. 3 | α | 281 | Twin-screw | 310 | 5 | 56 | 28 | 5.5 | 5 | 9.2 | 71.4 | 5.5 | 0.015 | 1.2 | 4 | 81 | 0.4 |
| Com. Ex. 4 | α | 281 | Twin-screw | 370 | 22 | 1355 | 560 | 5.5 | 100 | 9.2 | 74.1 | 2.2 | 0.057 | 0.7 | 0 | 75 | 1.4 |
| Com. Ex. 5 | α | 281 | Single-screw | 340 | 11 | 246 | 560 | 5.5 | 100 | 8.9 | 76.9 | 5.2 | 0.014 | 0.9 | 6 | 79 | 0.4 |
| Com. Ex. δ | α | 281 | Single-screw | 360 | 23 | 1284 | 560 | 5.5 | 100 | 9.1 | 74.1 | 2.0 | 0.056 | 0.8 | 2 | 77 | 1.2 |

As shown in Table 7, in each of Examples 1 to 10, since the thermal history of the liquid crystal polyester was adjusted by the heating temperature and the residence time in relation to the melting point of the liquid crystal polyester, the total CEG amount was reduced, and the ketone bond amount was reduced. Therefore, the liquid crystal polyester fibers of Examples 1 to 10 can suppress the amount of gas generation, so that bubble generation can be suppressed in the resin plates produced using these liquid crystal polyester fibers. In addition, the obtained liquid crystal polyester fibers have excellent hue and decreased surface roughness, and thus can be suitably used to produce molded bodies having excellent appearance and physical properties.

On the other hand, in each of Comparative Examples 1 to 3 and 5, since the thermal history of the liquid crystal polyester was low, the ketone bond amount was reduced, but the total CEG amount was not sufficiently reduced. Therefore, the liquid crystal polyester fibers of Comparative Examples 1 to 3 and 5 produce a larger amount of $CO_2$ gas generation as compared to Examples 1 to 10, and more bubbles are generated in the resin plates produced using these liquid crystal polyester fibers than in those of these Examples.

In each of Comparative Examples 4 and 6, since the thermal history of the liquid crystal polyester was high, the total CEG amount was reduced, but the ketone bond amount was large. Therefore, the liquid crystal polyester fibers of Comparative Examples 4 and 6 have a lower L* value and inferior hue as compared to Examples 1 to 10. In addition, the liquid crystal polyester fibers of Comparative Examples 4 and 6 have a larger surface roughness Ra as compared to Examples 1 to 10.

## INDUSTRIAL APPLICABILITY

The liquid crystal polyester fiber according to the present invention can suppress gas generation during heating and has excellent hue, and thus can be used as a heat-fusible fiber for producing a molded body (e.g., a fiber-reinforced composite material).

Although the present invention has been described above in connection with the preferred embodiment thereof with reference to the drawings, numerous additions, changes, and deletions can be made without departing from the gist of the present invention. Therefore, such additions, changes, and deletions are also construed as included within the scope of the present invention.

## REFERENCE NUMERALS

| | |
|---|---|
| 100 | apparatus |
| 10 | extruder |
| 11 | hopper |
| 12 | barrel |
| 13 | screw |
| 14 | vent |
| 20 | pipe |
| 30 | gear pump |
| 40 | spinning head |
| 41 | spinneret |
| X | flow direction |

## Claims

1. A liquid crystal polyester fiber having a total amount of carboxy end groups (total CEG amount) of 5.0 mEq/kg or less and a ketone bond amount of 0.05 mol% or less.

2. The liquid crystal polyester fiber according to claim 1, having a melting point of 380°C or lower.

3. The liquid crystal polyester fiber according to claim 1 or 2, having a tenacity of lower than 18 cN/dtex.

4. The liquid crystal polyester fiber according to any one of claims 1 to 3, comprising a liquid crystal polyester comprising a structural unit derived from 4-hydroxybenzoic acid at a proportion of 50 mol% or more.

5. The liquid crystal polyester fiber according to any one of claims 1 to 4, having a total amount of one-end groups of

50 mEq/kg or more.

6. A method for producing the liquid crystal polyester fiber as recited in any one of claims 1 to 5, the method at least comprising: melt-kneading a liquid crystal polyester in an extruder to obtain a melt-kneaded material; and spinning by discharging the melt-kneaded material from a spinneret.

7. The method according to claim 6, wherein, in the melt-kneading, a thermal history TH represented by the following formula (1) is 250 to 1100,
Math. 1

$$TH = \sum_{x=y+1}^{M} \{T_x - (Mp_0 + 10)\} \quad (1)$$

in the formula, $Mp_0$ denotes a melting point (°C) of the liquid crystal polyester; x denotes a time (minutes), where x = 0 is defined as a time when the liquid crystal polyester is fed into the extruder, x = 1, 2,... is defined as each time during residence, and x = M is defined as a time when the melt-kneaded material is discharged from the spinneret; $T_x$ ($T_1$, $T_2$,..., $T_M$) denotes each heating temperature (°C) every minute in the residence time from feeding to discharging; y denotes a staying time (minutes) in a heating temperature region where $T_x \leq (Mp_0 + 10)$ after feeding; when M and y are not integers, M and y are rounded off and calculated as integers; and M is an integer satisfying $M \geq y + 1$.

8. The method according to claim 6 or 7, wherein the extruder is a twin-screw extruder.

9. A fiber structure comprising, at least in part of the fiber structure, the liquid crystal polyester fiber as recited in any one of claims 1 to 5.

10. The fiber structure according to claim 9, further comprising a reinforcing fiber,

11. A method for producing a molded body, the method comprising heating the fiber structure as recited in claim 9 or 10 at a temperature equal to or higher than the melting point of the liquid crystal polyester fiber to mold the molded body.

Fig. 1

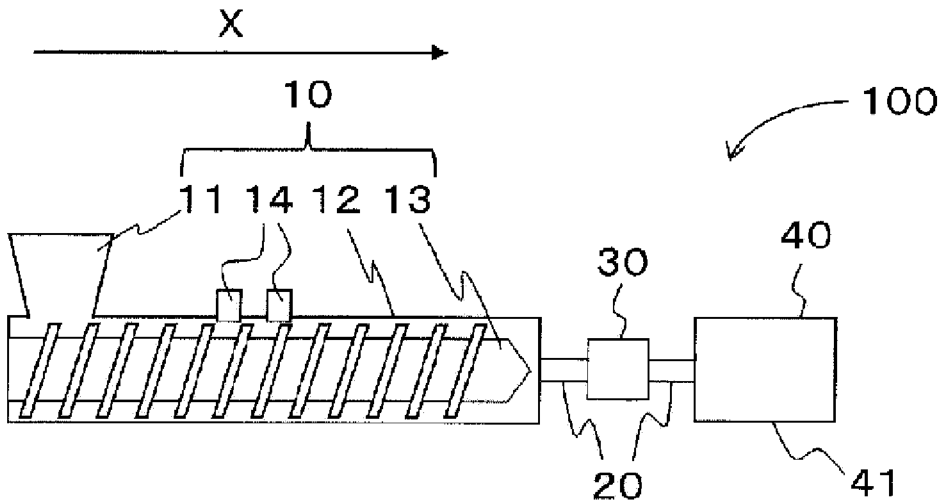

## INTERNATIONAL SEARCH REPORT

International application No. **PCT/JP2022/036593**

**A. CLASSIFICATION OF SUBJECT MATTER**

***D01F 6/84***(2006.01)i
FI: D01F6/84 302A; D01F6/84 311

According to International Patent Classification (IPC) or to both national classification and IPC

**B. FIELDS SEARCHED**

Minimum documentation searched (classification system followed by classification symbols)

D01F6/84; D01F6/62; D01F6/92

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2013/099863 A1 (TORAY INDUSTRIES, INC.) 04 July 2013 (2013-07-04) example 1 | 1-11 |
| A | JP 5-85642 B2 (SUMITOMO KAGAKU KOGYO KK) 08 December 1993 (1993-12-08) claims | 1-11 |
| P, X | WO 2022/113802 A1 (KURARAY CO) 02 June 2022 (2022-06-02) claims, examples | 3, 5, 7, 11 |
| P, A | | 3, 5, 7, 11 |

☐ Further documents are listed in the continuation of Box C.

☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 November 2022** | **15 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/036593**

| Patent document cited in search report | Publication date (day/month/year) | Patent family member(s) | Publication date (day/month/year) |
|---|---|---|---|
| WO 2013/099863 A1 | 04 July 2013 | EP 2799600 A1<br>example 1<br>US 2015/0004409 A1<br>CN 104024495 A | |
| JP 5-85642 B2 | 08 December 1993 | EP 181610 A2<br>claims<br>JP 61-113818 A<br>JP 61-124623 A<br>US 4871501 A | |
| WO 2022/113802 A1 | 02 June 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021166307 A
- JP H01280031 A
- JP 2013237945 A
- JP H0473227 A


### Non-patent literature cited in the description


- *Polymer Degradation and Stability,* 2002, vol. 76, 85-94